(19) 
Europäisches Patentamt
European Patent Office
Office européen des brevets

(11) **EP 2 445 128 B1**

(12) **EUROPEAN PATENT SPECIFICATION**

(45) Date of publication and mention
of the grant of the patent:
**27.05.2015 Bulletin 2015/22**

(21) Application number: **10803828.2**

(22) Date of filing: **07.04.2010**

(51) Int Cl.:
*H04W 74/08* (2009.01)     *H04B 7/08* (2006.01)

(86) International application number:
**PCT/CN2010/071602**

(87) International publication number:
**WO 2011/011995 (03.02.2011 Gazette 2011/05)**

(54) **METHOD AND DEVICE FOR DETECTING RANDOM ACCESS SIGNAL IN ORTHOGONAL FREQUENCY DIVISION MULTIPLEXING SYSTEM**

VERFAHREN UND VORRICHTUNG ZUR ERKENNUNG EINES ZUFÄLLIGEN ZUGANGSSIGNALS IN EINEM ORTHOGONALEN FREQUENZTRENNUNGS-MULTIPLEXING-SYSTEM

PROCÉDÉ ET DISPOSITIF DE DÉTECTION D'UN SIGNAL D'ACCÈS ALÉATOIRE DANS UN SYSTÈME DE MULTIPLEXAGE PAR RÉPARTITION ORTHOGONALE DE LA FRÉQUENCE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.07.2009 CN 200910090133**

(43) Date of publication of application:
**25.04.2012 Bulletin 2012/17**

(73) Proprietor: **ZTE Corporation**
**Shenzhen, Guangdong 518057 (CN)**

(72) Inventors:
• **FEI, Peiyan**
**Shenzhen**
**Guangdong 518057 (CN)**
• **ZHANG, Yuting**
**Shenzhen**
**Guangdong 518057 (CN)**
• **LI, Lei**
**Shenzhen**
**Guangdong 518057 (CN)**
• **QIN, Hongfeng**
**Shenzhen**
**Guangdong 518057 (CN)**
• **ZENG, Zhaohua**
**Shenzhen**
**Guangdong 518057 (CN)**

(74) Representative: **UEXKÜLL & STOLBERG**
**Patentanwälte**
**Beselerstrasse 4**
**22607 Hamburg (DE)**

(56) References cited:
**CN-A- 1 404 309     CN-A- 1 809 047**
**CN-A- 101 320 994     US-A1- 2005 047 530**

**Description**

**TECHNICAL FIELD**

The disclosure relates to the detection technology of random access signals, particularly to a method and device for detecting a random access signal in an Orthogonal Frequency Division Multiplexing (OFDM) system.

**BACKGROUND**

In fact, OFDM is a type of Multi-Carrier Modulation (MCM), and the main idea of OFDM is to divide an original channel into several orthogonal sub-channels, convert high-speed data signals into parallel low-speed sub-data streams, and modulate the low-speed sub-data streams to every sub-channel to be transmitted. The orthogonal signals can be separated by correlation technologies at a receiving end to reduce interference among the sub-channels. The bandwidth of signals on every sub-channel is smaller than the bandwidth of the sub-channel. Therefore a signal waveform on every sub-channel can be regarded as a smooth fading, to further eliminate the interference among symbols. In addition, the bandwidth of the signals on every sub-channel is merely a part of the bandwidth of the original channel and it becomes relatively easy to achieve channel balance. Therefore, during the Beyond 3G (B3G)/4G evolutionary process of wireless communication systems, OFDM is one of key technologies, which can be combined with diversity, space-time coding, interference and inter-channel interference suppression and smart antenna technologies, to improve the system performance.

With the evolution of 3G, B3G and future wireless communication systems, the wireless communication systems will provide more and more data and guarantee more reliable Quality of Service (QoS). At the same time, with the progress of the modern science and technology, the more and more complicated environment where User Equipments (UE) stay, high-speed motion ,multi-path reflection conditions and so on, make the wireless communication systems to be improved. An OFDM system can change a bandwidth multi-path frequency selective channel into a group of convolutional parallel narrow-band frequency flat fading channels, which is featured by effective elimination of multi-path interference, a convenient adjustment of a self-adaptive data rate, a simple balancing process and a high spectrum efficiency, and has become one of core transmission technologies in a physical layer of a future wireless communication system.

US 2005/047530 A1 discloses a method and arrangement for detecting a random access channel preamble using multiple antenna reception in a communication system according to the prior art.

In a current OFDM system, it is infeasible for random access signals to depend on a Signal to Interference Ratio (SIR) to realize Maximum Ration Combining (MRC) of multi-antenna data, because the base stations cannot obtain the corresponding SIR information of the random access signals. For this reason, if the channel quality is worse, the detection performance of the random access signals is worse, which is unfavorable for the access of UE.

**SUMMARY**

In view of this, the disclosure aims to provide a method and device for detecting a random access signal in an OFDM system, which can acquire better detection performance of random access signals with MRC.

In order to achieve the aforementioned aim, the technical proposal of the disclosure is realized by the following method.

A method for detecting a random access signal in an OFDM system comprises:

converting a random access signal received by an antenna into a frequency domain signal, point-multiplying the frequency domain signal by a conjugate of a frequency domain mother code, converting a point multiplication result to a time domain signal, evaluating a modulus square of the converted time domain signal, and obtaining a correlation sequence;

evaluating a mean value of the correlation sequence, and regarding a reciprocal of the mean value as an indirect weight factor of the correlation sequence;

determining a maximum or a minimum in indirect weight factors of correlation sequences of random access signals received at all antennae, and calculating a weight factor of each antenna according to the maximum or the minimum of the indirect weight factors; and

multiplying a correlation sequence of each antenna by a corresponding weight factor of the correlation sequence and then performing a combination to obtain a weighted combined correlation sequence, and detecting the random access signal according to the weighted combined correlation sequence.

Preferably, the step of converting a point multiplication result to a time domain signal may comprise:

extending the point multiplication result, converting an extending result to a time domain signal, wherein an extended length is configured by the system and extension of the sequence is filled with "0".

Preferably, the step of calculating a weight factor of each antenna according to the maximum of the indirect weight factors may specifically comprise:

$F_i = (max\_f)^p / (factor_i)^q \times n$, where $F_i$ is a weight factor of antenna i, max_f is the maximum of the indirect weight factors of all antennae, $factor_i$ is an indirect weight factor of antenna i, p and q are real numbers no less than 0 and n is a positive real number.

Preferably, the step of calculating a weight factor of each antenna according to the minimum of the indirect weight factors may specifically comprise:

$F_i = (factor_i)^p / (min\_f)^q \times n$, where $F_i$ is a weight factor of antenna i, min_f is the minimum of the indirect weight factors of all antennae, $factor_i$ is an indirect weight factor of antenna i, p and q are real numbers no less than 0 and n is a positive real number.

Preferably, the step of multiplying a correlation sequence of each antenna by a corresponding weight factor of the relevant sequence and then performing a combination to obtain a weighted combined correlation sequence may comprise:

multiplying a correlation sequence of each antenna by a corresponding weight factor of the relevant sequence and then performing an accumulation to obtain a weighted combined correlation sequence.

A device for detecting a random access signal in an OFDM system comprises: a first converting unit, a point-multiplication unit, a second converting unit, a correlation sequence acquisition unit, an indirect weight factor acquisition unit, a determining unit, a weight factor calculating unit, a weighting combining acquisition unit and a detection unit, wherein
the first converting unit may be used for converting a random access signal received by an antenna into a frequency domain signal;
the point-multiplication unit may be used for point-multiplying the frequency domain signal converted by the first converting unit by a conjugate of a frequency domain mother code;
the second converting unit may be used for converting a point multiplication result of the point-multiplication unit into a time domain signal;
the correlation sequence acquisition unit may be used for evaluating a modulus square of the converted time domain signal to obtain a correlation sequence;
the indirect weight factor acquisition unit may be used for evaluating a mean value of the correlation sequence, a reciprocal of the mean value is regarded as an indirect weight factor of the correlation sequence;
the determining unit may be used for determining a maximum or a minimum of indirect weight factors of correlation sequences of random access signals received at all antennae;
the weight factor calculating unit may be used for calculating a weight factor of each antenna according to the maximum or the minimum of the indirect weight factors;
the weighting combining acquisition unit may be used for multiplying a correlation sequence of each antenna by a corresponding weight factor of the correlation sequence and then performing a combination to obtain a weighted combined correlation sequence; and
the detection unit may be used for detecting the random access signal according to the weighted combined correlation sequence.

Preferably, the device may further comprise:

an extending unit, for extending the point multiplication result; wherein an extended length is configured by the system and extension of the sequence is filled with "0"; the second converting unit may be further used for converting an extending result of the extending unit into a time domain signal.

Preferably, the weight factor calculating unit may be further used for calculating a weight factor of each antenna according to $F_i = (max\_f)^p / (factor_i)^q \times n$, where $F_i$ is a weight factor of antenna i, max_f is the maximum of the indirect weight factors of all antennae, $factor_i$ is an indirect weight factor of antenna i, p and q are real numbers no less than 0 and n is a positive real number.

Preferably, the weight factor calculating unit may be further used for calculating a weight factor of each antenna according to $F_i = (factor_i)^p / (min\_f)^q \times n$, where $F_i$ is a weight factor of antenna i, min_f is the minimum of the indirect weight factors of all antennae, $factor_i$ is an indirect weight factor of antenna i, p and q are real numbers no less than 0 and n is a positive real number.

Preferably, the weighting combining acquisition unit may be further used for multiplying a correlation sequence of each antenna by a corresponding weight factor thereof and then performing an accumulation to obtain a weighted combined correlation sequence.

In the disclosure, a random access signal received by each antenna is subjected to correlation processing to obtain a correlation sequence through which a weight factor identifying channel quality of an antenna is acquired. The weight factor of the antenna with better channel quality is greater. During the combination of the correlation sequence of the random access signal, the correlation sequence of the random access signal is multiplied by the weight factor of the antenna at the same time to obtain better quality of the combined correlation sequence and then better detection performance can be achieved. The disclosure greatly improves the detection performance of a random access signal.

**BRIEF DESCRIPTION OF THE DRAWINGS**

Fig. 1 shows a flowchart of a method for detecting a random access signal in an OFDM system of the disclosure; and

Fig. 2 shows a schematic diagram of a composition structure of a device for detecting a random access signal in an OFDM system of the disclosure.

# DETAILED DESCRIPTION

The fundamental idea of the disclosure is: a random access signal received by each antenna is subjected to relevant processing to obtain a correlation sequence through which a weight factor identifying channel quality of an antenna is obtained; the antenna with better channel quality has a greater weight factor; when the correlation sequence of the random access signal is combined, it is multiplied by the weight factor of the antenna at the same time to obtain better quality of the combined correlation sequence and better detection performance can be achieved. The disclosure greatly improves the detection performance of a random access signal.

In order to make the objectives, technical proposals and advantages of the disclosure more clear, the disclosure is further explained in details with the drawings and embodiments hereinafter.

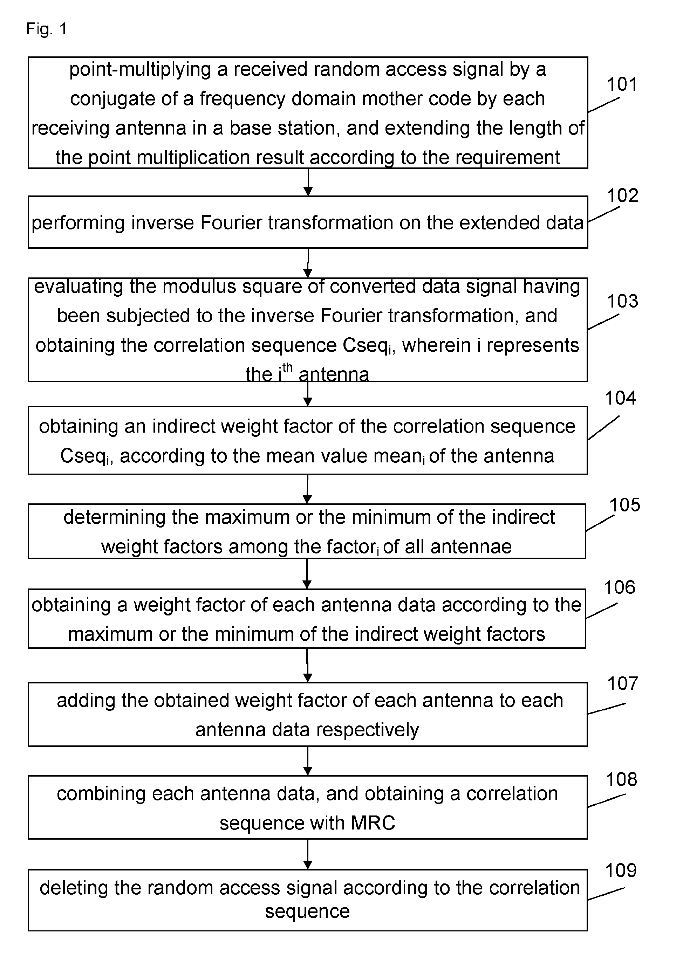

Fig. 1 shows a flowchart of a method for detecting a random access signal in an OFDM system of the disclosure. As shown in Fig. 1, the method for detecting a random access signal in an OFDM system comprises the following steps.

Step 101: point-multiplying a received random access signal by a conjugate of a frequency domain mother code by each receiving antenna in a base station, and extending the length of the point multiplication result according to a requirement, wherein the value of the extended length N is determined according to a system requirement.

Since the received random signal of UE is a time domain signal, it needs to be converted into a frequency domain signal when being processed together with the frequency domain mother code. More specifically, a time domain signal can be converted into a frequency domain signal through Fourier transformation. The frequency domain mother code is a code configured by the system and saved in every base station, and the conjugate is determined by the frequency domain mother code.

The extended length of the point multiplication result is related to the calculation accuracy configured by the system; the system may set a point multiplication result with a corresponding length, if the length cannot be achieved, data "0" is supplemented to realize extension of the length, and the extension of the sequence is filled with "0".

Step 102: performing inverse Fourier transformation on the point multiplication result or the extended data.

The objective of the inverse Fourier transformation is to convert a frequency domain signal into a time domain signal.

Step 103: evaluating a modulus square of the time domain signal which has been subjected to inverse Fourier transformation, and obtaining a correlation sequence $Cseq_i$, wherein i represents the $i^{th}$ antenna.

After evaluating the modulus square of the time domain signal, discrete values will be obtained to form the correlation sequence $Cseq_i$.

Step 104: evaluating a mean value $mean_i$ of the correlation sequence $Cseq_i$.

The discrete values in the correlation sequence are averaged, which are obtained in step 103.

Step 104: obtaining an indirect weight factor of the correlation sequence $Cseq_i$, according to the mean value $mean_i$ of the antenna, wherein the indirect weight factor $factor_i=1/mean_i$, which means to evaluate a reciprocal of $mean_i$.

Step 105: determining the maximum max_f or the minimum min_f of the indirect weight factors among the $factor_i$ of all antennae;

namely, comparing indirect weight factors of the correlation sequences of all antennae on the base station to determine the maximum and the minimum.

Step 106: obtaining a weight factor $F_i$ of each antenna data according to the maximum max_f or the minimum min_f of the indirect weight factors, specifically comprising the following determining method.

If a weight factor of antenna data is obtained according to the maximum max_f of the indirect weight factors, a method for calculating a weight factor of each antenna comprises:

$F_i=(\text{max\_f})^p/(\text{factor}_i)^q \times n$, where $F_i$ is a weight factor of antenna i, max_f is the maximum of the indirect weight factors of all antennae, $factor_i$ is an indirect weight factor of antenna i, p and q are real numbers no less than 0 and n is a positive real number. Here, values of p, q and n are preferably 1. In an actual system, specific values of p, q and n are determined by a bit width supported by hardware to ensure that a calculation result of $F_i$ is not greater than the bit width supported by the hardware.

If a weight factor of antenna data is obtained according to the minimum min_f of the indirect weight factors, a method for calculating a weight factor of each antenna comprises:

$F_i=(\text{factor}_i)^p/(\text{min\_f})^q \times n$, where $F_i$ is a weight factor of antenna i, min_f is the minimum of the indirect weight factors of all antennae, $factor_i$ is an indirect weight factor of antenna i, p and q are real numbers no less than 0 and n is a positive real number. Here, values of p, q and n are preferably 1. In an actual system, specific values of p, q and n are determined by a bit width supported by hardware to ensure that a calculation result of $F_i$ is not greater than the bit width supported by the hardware.

Since this step is only to calculate a weight factor of each antenna, the values of p, q and n will not influence a detection result of a combined correlation sequence of a random access signal of the disclosure.

Step 107: adding the obtained weight factor $F_i$ of each antenna to each antenna data respectively, i.e., multiplying the correlation sequence of the random access signal, which is obtained by each antenna, by the weight factor $F_i$ of the antenna, namely $Cseq_i' = Cseq_i \times F_i$, i=1,..., ANT, where ANT is the total number of antennae received by the base station.

Step 108: combining each antenna data, and obtaining a correlation sequence Cseq with MRC, namely $Cseq = \sum_{i=1}^{ANT} Cseq_i'$, where ANT is the total number of the antennae.

Step 109: deleting the random access signal according to the correlation sequence Cseq.

It can be seen from the aforementioned specific implementing process that by applying different weight factors to different antenna data, antenna with better quality of a received signal will have a greater weight factor $F_i$ so that a combined correlation sequence will help to improve the detection performance of a random access signal.

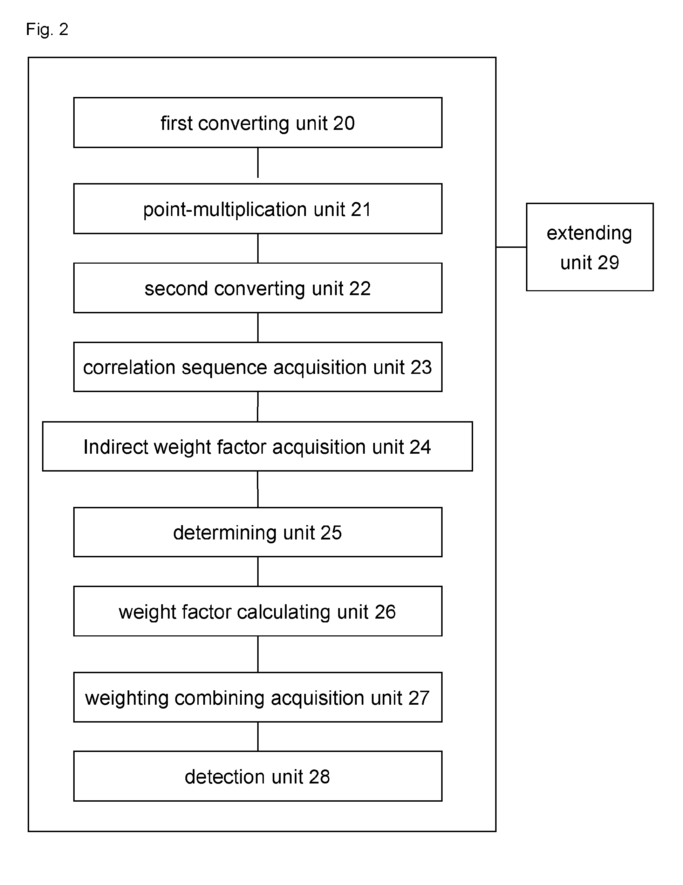

Fig. 2 shows a schematic diagram of a composition structure of a device for detecting a random access signal in an OFDM system of the disclosure. As shown in Fig. 2, the device for detecting a random access signal in an OFDM system of the disclosure comprises: a first converting unit 20, a point-multiplication unit 21, a second converting unit 22, a correlation sequence acquisition unit 23, an indirect weight factor acquisition unit 24, a determining unit 25, a weight factor calculating unit 26, a weighting combining acquisition unit 27 and a detection unit 28, wherein the first converting unit 20 is used for converting a random access signal received by an antenna into a frequency domain signal; the point-multiplication unit 21 is used for point-multiplying the frequency domain signal converted by the first converting unit 20 by a conjugate of a frequency domain mother code; the second converting unit 22 is used for converting a point multiplication result of the point-multiplication unit into a time domain signal; the correlation sequence acquisition unit 23 is used for evaluating a modulus square of the converted time domain signal to obtain a correlation sequence; the indirect weight factor acquisition unit 24 is used for evaluating a mean value of the correlation sequence, a reciprocal of the mean value is regarded as an indirect weight factor of the correlation sequence; the determining unit 25 is used for determining a maximum or a minimum of indirect weight factors of correlation sequences of random access signals received at all antennae; the weight factor calculating unit 26 is used for calculating a weight factor of each antenna according to the maximum or the minimum of the indirect weight factors; the weight factor calculating unit 26 calculates the weight factor of each antenna according to the maximum of the indirect weight factors of all antennae, comprising: $F_i = (max\_f)^p / (factor_i)^q \times n$, where $F_i$ is a weight factor of antenna i, max_f is the maximum of the indirect weight factors of all antennae, $factor_i$ is an indirect weight factor of antenna i, p and q are real numbers no less than 0 and n is a positive real number. Here, values of p, q and n are preferably 1. In an actual system, specific values of p, q and n are determined by a bit width supported by hardware to ensure that a calculation result of $F_i$ is not greater than the bit width supported by the hardware. The weight factor calculating unit 26 calculates the weight factor of each antenna according to the minimum of the indirect weight factors, comprising: $F_i = (factor_i)^p / (min\_f)^q \times n$, where $F_i$ is a weight factor of antenna i, min_f is the minimum of the indirect weight factors of all antennae, $factor_i$ is an indirect weight factor of antenna i, p and q are real numbers no less than 0 and n is a positive real number. Here, values of p, q and n are preferably 1. In an actual system, specific values of p, q and n are determined by a bit width supported by hardware to ensure that a calculation result of $F_i$ is not greater than the bit width supported by the hardware. The weighting combining acquisition unit 27 is used for multiplying a correlation sequence of each antenna by its corresponding weight factor and then performing a combination to obtain a weighted combined correlation sequence, specifically comprising: the weighting combining acquisition unit 27 multiplies a correlation sequence of each antenna by the corresponding weight factor thereof and then performs an accumulation to obtain a weighted combined correlation sequence; the detection unit 28 is used for detecting the random access signal according to the weighted combined correlation sequence.

As shown in Fig. 2, the device for detecting a random access signal in an OFDM system further comprises an extending unit 29 for extending the point multiplication result; wherein an extended length is configured by the system and the extension of the sequence is filled with "0"; in this case, the second converting unit 22 converts an extending result of the extending unit 29 into a time domain signal.

It should be well understood for those skilled in the art that the device as shown in Fig. 2 for detecting a random access signal in an OFDM system is set for realizing the aforementioned method for detecting a random access signal in an OFDM system. The implementation functions of all processing units in this figure can be understood according to relevant description of the aforementioned method. The functions of all units shown in Fig. 2 can be realized by programs operating in a processor, or by a specific logic circuit.

**Claims**

1. A method for detecting a random access signal in an OFDM system, comprising:

converting a random access signal received by an antenna into a frequency domain signal, point-multiplying the frequency domain signal by a conjugate of a frequency domain mother code, converting a point multiplication result to a time domain signal, evaluating a modulus square of the converted time domain signal, and obtaining a correlation sequence;

evaluating a mean value of the correlation sequence, and regarding a reciprocal of the mean value as an indirect weight factor of the correlation sequence;

determining a maximum or a minimum in indirect weight factors of correlation sequences of random access signals received at all antennae, and calculating a weight factor of each antenna according to the maximum or the minimum of the indirect weight factors; and

multiplying a correlation sequence of each antenna by a corresponding weight factor of the correlation sequence and then performing a combination to obtain a weighted combined correlation sequence, and detecting the random access signal according to the weighted combined correlation sequence.

2. The method according to claim 1, wherein the step of converting a point multiplication result to a time domain signal comprises:

extending the point multiplication result, converting an extending result to a time domain signal, wherein an extended length is configured by the system and extension of the sequence is filled with "0".

3. The method according to claim 1 or 2, wherein the step of calculating a weight factor of each antenna according to the maximum of the indirect weight factors specifically comprises:

$F_i = (max\_f)^p / (factor_i)^q \times n$, where $F_i$ is a weight factor of antenna i, max_f is the maximum of the indirect weight factors of all antennae, $factor_i$ is an indirect weight factor of antenna i, p and q are real numbers no less than 0 and n is a positive real number.

4. The method according to claim 1 or 2, wherein the step of calculating a weight factor of each antenna according to the minimum of the indirect weight factors specifically comprises:

$F_i = (factor_i)^p / (min\_f)^q \times n$, where $F_i$ is a weight factor of antenna i, min_f is the minimum of the indirect weight factors of all antennae, $factor_i$ is an indirect weight factor of antenna i, p and q are real numbers no less than 0 and n is a positive real number.

5. The method according to claim 1, wherein the step of multiplying a correlation sequence of each antenna by a corresponding weight factor of the relevant sequence and then performing a combination to obtain a weighted combined correlation sequence comprises:

multiplying a correlation sequence of each antenna by a corresponding weight factor of the relevant sequence and then performing an accumulation to obtain a weighted combined correlation sequence.

6. A device for detecting a random access signal in an OFDM system, comprising:

a first converting unit, a point-multiplication unit, a second converting unit, a correlation sequence acquisition unit, an indirect weight factor acquisition unit, a determining unit, a weight factor calculating unit, a weighting combining acquisition unit and a detection unit, wherein the first converting unit is used for converting a random access signal received by an antenna into a frequency domain signal;

the point-multiplication unit is used for point-multiplying the frequency domain signal converted by the first converting unit by a conjugate of a frequency domain mother code;

the second converting unit is used for converting a point multiplication result of the point-multiplication unit into a time domain signal;

the correlation sequence acquisition unit is used for evaluating a modulus square of the converted time domain signal to obtain a correlation sequence;

the indirect weight factor acquisition unit is used for evaluating a mean value of the correlation sequence, a reciprocal of the mean value is regarded as an indirect weight factor of the correlation sequence;

the determining unit is used for determining a maximum or a minimum of indirect weight factors of correlation sequences of random access signals received at all antennae;

the weight factor calculating unit is used for calculating a weight factor of each antenna according to the maximum or the minimum of the indirect weight factors;

the weighting combining acquisition unit is used for multiplying a correlation sequence of each antenna by a corresponding weight factor of the correlation sequence and then performing a combination to obtain a weighted combined correlation sequence; and

the detection unit is used for detecting the random access signal according to the weighted combined correlation sequence.

7. The device according to claim 6, further comprising: an extending unit, for extending the point multiplication result; wherein an extended length is configured by the system and extension of the sequence is filled with "0"; and the second converting unit is further used for converting an extending result of the extending unit into a time domain signal.

8. The device according to claim 6 or 7, wherein the weight factor calculating unit is further used for calculating a weight factor of each antenna according to $F_i=(max\_f)^p/(factor_i)^q$ x n; where $F_i$ is a weight factor of antenna i, max_f is the maximum of the indirect weight factors of all antennae, $factor_i$ is an indirect weight factor of antenna i, p and q are real numbers no less than 0 and n is a positive real number.

9. The device according to claim 6 or 7, wherein the weight factor calculating unit is further used for calculating a weight factor of each antenna according to $F_i=(factor_i)^p/(min\_f)^q$ x n; where $F_i$ is a weight factor of antenna i, min_f is the minimum of the indirect weight factors of all antennae, $factor_i$ is an indirect weight factor of antenna i, p and q are real numbers no less than 0 and n is a positive real number.

10. The device according to claim 6, wherein the weighting combining acquisition unit is further used for multiplying a correlation sequence of each antenna by a corresponding weight factor thereof and then performing an accumulation to obtain a weighted combined correlation sequence.

**Patentansprüche**

1. Verfahren zur Erkennung eines zufälligen Zugangssignals in einem OFDM System, umfassend:

Umwandeln eines zufälligen Zugangssignals, das über eine Antenne empfangen worden ist, in ein Frequenzdomänesignal, Punkt-Multiplizieren des Frequenzdomänesignals durch eine Konjugiert-Komplexe eines Frequenzdomänemuttercodes, Umwandeln eines Punkt-Multiplikationsergebnisses zu einem Zeitbereichssignal, Auswerten eines Quadratmoduls des umgewandelten Zeitbereichssignals, und Erhalten einer Korrelationsfolge, Auswerten eines Mittelwerts von der Korrelationsfolge, und Betrachten eines Kehrwerts des Mittelwerts als ein indirekter Gewichtsfaktor der Korrelationsfolge,

Bestimmen eines Maximums oder eines Minimums in indirekten Gewichtsfaktoren von Korrelationsfolgen von zufälligen Zugangssignalen, die über alle Antennen empfangen wurden, und Berechnen eines Gewichtsfaktors von jeder Antenne gemäß dem Maximum oder dem Minimum von den indirekten Gewichtsfaktoren, und Multiplizieren einer Korrelationsfolge von jeder Antenne mit einem entsprechenden Gewichtsfaktor der Korrelationsfolge und nachfolgend Durchführen einer Kombination, um eine gewichtete kombinierte Korrelationsfolge zu erhalten, und Erfassen des zufälligen Zugangssignals gemäß der gewichteten kombinierten Korrelationsfolge.

2. Verfahren nach Anspruch 1, wobei der Schritt des Konvertierens eines Punkt-Multiplikationsergebnisses zu einem Zeitdomänesignal umfasst:

Verlängern des Punkt-Multiplikationsergebnisses, Umwandeln eines verlängerten Ergebnisses zu einem Zeitbereichssignal, wobei eine verlängerte Länge durch das System konfiguriert ist und die Verlängerung der Folge mit "0" gefüllt ist.

3. Verfahren nach Anspruch 1 oder 2, wobei der Schritt des Berechnens eines Gewichtsfaktors jeder Antenne gemäß dem Maximum der indirekten Gewichtsfaktoren insbesondere umfasst:

$F_i=(max\_f)^p/(factor_i)^q$ x n, wobei $F_i$ ein Gewichtsfaktor der Antenne i ist, max_f das Maximum des indirekten Gewichtsfaktors von allen Antennen ist, $factor_i$ ein indirekter Gewichtsfaktor der Antenne i ist, p und q reelle Zahlen nicht kleiner als 0 sind und n eine positive reelle Zahl ist.

4. Verfahren nach Anspruch 1 oder 2, wobei der Schritt des Berechnens eines Gewichtsfaktors von jeder Antenne gemäß dem Minimum der indirekten Gewichtsfaktoren insbesondre umfasst:

$F_i=(factor_i)^p/min\_f)^q$ x n, wobei $F_i$ ein Gewichtsfaktor von Antenne i ist, min_f das Minimum der indirekten Gewichtsfaktoren von allen Antennen ist, $factor_i$ ein indirekter Gewichtsfaktor von Antenne i ist, p und q reelle Zahlen nicht kleiner als 0 sind und n eine positive reelle Zahl ist.

5. Verfahren nach Anspruch 1, wobei der Schritt des Multiplizierens einer Korrelationsfolge von jeder Antenne mit einem entsprechenden Gewichtsfaktor von der relevanten Folge und nachfolgend Durchführen einer Kombination, um eine gewichtete kombinierte Korrelationsfolge zu erhalten, umfasst:

Multiplizieren einer Korrelationsfolge von einer Antenne mit einem entsprechen Gewichtsfaktor von der relevanten Folge und nachfolgend Durchführen einer Akkumulation, um eine gewichtete kombinierte Korrelationsfolge zu erhalten.

6. Vorrichtung zur Erkennung eines zufälligen Zugangssignals in einem OFDM System, umfassend:

eine erste Umwandlungseinheit, eine Punkt-Multiplikationseinheit, eine zweite Umwandlungseinheit, eine Korrelationsfolgenerfassungseinheit, eine indirekte Gewichtsfaktorerfassungseinheit, eine Bestimmungseinheit, eine Gewichtsfaktorberechnungseinheit, eine Gewichtungskombinierungserfassungseinheit und eine Erkennungseinheit, wobei
die erste Umwandlungseinheit zum Umwandeln eines zufälligen Zugangssignals, das über eine Antenne empfangen worden ist, in ein Frequenzdomänesignal verwendet wird,
die Punkt-Multiplikationseinheit zum Punkt-Multiplizieren des Frequenzdomänesignals verwendet wird, das durch die erste Umwandlungseinheit durch eine Konjugiert-Komplexe eines Frequenzdomänemuttercodes umgewandelt wird,
die zweite Umwandlungseinheit zum Umwandeln eines Punkt-Multiplikationsergebnisses von der Punkt-Multiplikationseinheit in ein Zeitdomänesignal verwendet wird,
die Korrelationsfolgenerfassungseinheit zum Auswerten eines Quadratmoduls des konvertierten Zeitbereichssignals verwendet wird, um eine Korrelationsfolge zu erhalten,
die indirekte Gewichtsfaktorerfassungseinheit zum Auswerten eines Mittelwertes der Korrelationsfolge verwendet wird, ein Kehrwert des Mittelwertes als ein indirekter Gewichtsfaktor der Korrelationsfolge betrachtet wird,
die Bestimmungseinheit zum Bestimmen eines Maximums oder eines Minimums der indirekten Gewichtsfaktoren von Korrelationsfolgen von zufälligen Zugangssignalen verwendet wird, die über alle Antennen empfangen worden sind,
die Gewichtsfaktorberechnungseinheit zum Berechnen eines Gewichtsfaktors von jeder Antenne gemäß dem Maximum oder dem Minimum der indirekten Gewichtsfaktoren verwendet wird,
die Gewichtungskombinierungserfassungseinheit zum Multiplizieren einer Korrelationsfolge jeder Antenne mit einen entsprechenden Gewichtsfaktor einer Korrelationsfolge und nachfolgend zum Durchführen einer Kombination verwendet wird, um eine gewichtete kombinierte Korrelationsfolge zu erhalten, und

die Erkennungseinheit zur Erkennung des zufälligen Zugangssignals gemäß der gewichtet-kombinierten Korrelationsfolge verwendet wird.

7. Vorrichtung nach Anspruch 6 weiter umfassend: eine Verlängerungseinheit zum Verlängern des Punkt-Multiplikationsergebnisses,
wobei eine verlängerte Länge durch das System konfiguriert ist und die Verlängerung der Folge mit "0" gefüllt ist, und die zweite Umwandlungseinheit weiterhin zum Umwandeln eines verlängerten Ergebnisses der Verlängerungseinheit in ein Zeitdomänesignal verwendet wird.

8. Vorrichtung nach Anspruch 6 oder 7, wobei die Gewichtsfaktorberechnungseinheit weiterhin zum Berechnen eines Gewichtsfaktors von jeder Antenne gemäß $F_i = (max\_f)^p / (factor_i)^q \times n$ verwendet wird, wobei $F_i$ ein Gewichtsfaktor der Antenne i ist, $max\_f$ das Maximum der indirekten Gewichtsfaktoren von allen Antennen ist, $factor_i$ ein indirekter Gewichtsfaktor von Antenne i ist, p und q reelle Zahlen nicht kleiner als 0 sind und n eine positive reelle Zahl ist.

9. Vorrichtung nach Anspruch 6 oder 7, wobei die Gewichtsfaktorberechnungseinheit weiterhin zum Berechnen eines Gewichtsfaktors von jeder Antenne gemäß $F_i = (factor_i)^p / (min\_f)^q \times n$ verwendet wird, wobei $F_i$ ein Gewichtsfaktor von Antenne i ist, $min\_f$ das Minimum der indirekten Gewichtsfaktoren aller Antennen ist, $factor_i$ ein indirekter Gewichtsfaktor von Antenne i ist, p und q reelle Zahlen nicht kleiner als 0 sind und n eine positive reelle Zahl ist.

10. Vorrichtung nach Anspruch 6, wobei die Gewichtungskombinierungserfassungseinheit weiterhin zum Multiplizieren einer Korrelationsfolge von jeder Antenne mit einem entsprechenden Gewichtsfaktor derselben und nachfolgend zum Durchführen einer Akkumulation verwendet wird, um eine gewichtete kombinierte Korrelationsfolge zu erhalten.

## Revendications

1. Procédé de détection d'un signal d'accès aléatoire dans un système OFDM comprenant ;
la conversion d'un signal d'accès aléatoire reçu par une antenne en un signal du domaine fréquentiel, multiplication du signal de domaine fréquentiel par une valeur conjuguée d'un code parent du domaine fréquentiel, la conversion d'un résultat de multiplication en un signal de domaine de temps, l'évaluation d'un carré du facteur de conversion du signal de domaine de temps converti et l'obtention d'une séquence de corrélation ;
l'évaluation d'une valeur moyenne de la séquence de corrélation et la prise en considération d'une valeur inverse de la valeur moyenne comme facteurs de poids indirects de séquences de corrélation de signaux d'accès aléatoire reçus à toutes les antennes et calcul d'un facteur de poids de chaque antenne selon le maximum ou le minimum des facteurs de poids indirects et

multiplication d'une séquence de corrélation de chaque antenne par un facteur de poids correspondant de la séquence de corrélation et ensuite réalisation d'une combinaison pour obtenir une séquence de corrélation combinée pondérée et détection du signal d'accès aléatoire selon la séquence de corrélation combinée pondérée.

2. Procédé selon la revendication 1, l'étape de conversion d'un résultat de multiplication en un signal de domaine temporel comprenant :

l'extension du résultat de multiplication, la conversion d'un résultat étendu en un signal de domaine temporel et dans lequel une longueur étendue étant configurée par le système et l'extension de la séquence est remplie avec "0".

3. Procédé selon la revendication 1 ou 2, l'étape de calcul d'un facteur de poids de chaque antenne selon le maximum des facteurs de poids indirects comprenant de manière spécifique :

$F_i=(max\_f)^p/(facteur_i)^q$ x n, dans laquelle $F_i$ est un facteur de poids de l'antenne i, max_f est le maximum des facteurs de poids indirects de toutes les antennes, facteur_i est un facteur de poids indirect de l'antenne i, p et q sont des nombres réels pas inférieurs à 0 et n est un nombre réel positif.

4. Procédé selon la revendication 1 ou 2, l'étape de calcul d'un facteur de poids de chaque antenne selon le minimum des facteurs de poids indirects comprenant de manière spécifique :

$F_i=(facteur_i)^p/(min\_f)^q$ x n, dans laquelle $F_i$ est un facteur de poids de l'antenne i, min_f est le minimum des facteurs de poids indirects de toutes les antennes, facteur_i est un facteur de poids indirect de l'antenne i, p et q sont des nombres réels pas inférieurs à 0 et n est un nombre réel positif.

5. Procédé selon la revendication 1, l'étape de multiplication d'une séquence de corrélation de chaque antenne par un facteur de poids correspondant de la séquence pertinente et ensuite la réalisation d'une combinaison pour obtenir une séquence de corrélation combinée pondérée comprenant :

la multiplication d'une séquence de corrélation de chaque antenne par un facteur de poids correspondant de la séquence pertinente et ensuite réalisation d'une accumulation pour obtenir une séquence de corrélation combinée pondérée.

6. Dispositif pour détecter un signal d'accès aléatoire dans un système OFDM comprenant : une première unité de conversion, une unité de multiplication, une seconde unité de conversion, une unité d'acquisition de séquence de corrélation, une unité d'acquisition de facteur de poids indirect, une unité de détermination, une unité de calcul de facteur de poids, une unité d'acquisition de combinaison de pondération et une unité de détection, dans lequel

la première unité de conversion est utilisée pour convertir un signal d'accès aléatoire reçu par une antenne en un signal de domaine fréquentiel ;
l'unité de multiplication est utilisée pour la multiplication du signal de domaine fréquentiel converti par la première unité de conversion par une valeur conjuguée d'un code parent de domaine fréquentiel ;
la seconde unité de conversion est utilisée pour convertir un résultat de multiplication de l'unité de multiplication en un signal de domaine temporel ;
l'unité d'acquisition de séquence de corrélation est utilisée pour évaluer un carré du module de conversion du signal de domaine temporel converti pour obtenir une séquence de corrélation ;
l'unité d'acquisition de facteur de poids indirect est utilisée pour évaluer une valeur moyenne de la séquence de corrélation, une valeur inverse de la valeur moyenne étant considérée comme un facteur de poids indirect de la séquence de corrélation ;
l'unité de détermination est utilisée pour déterminer un maximum ou un minimum de facteurs de poids indirects de séquences de corrélation de signaux d'accès aléatoire reçus à toutes les antennes ;
l'unité de calcul du facteur de poids est utilisée pour calculer un facteur de poids de chaque antenne selon le maximum ou le minimum des facteurs de poids indirects ;
l'unité d'acquisition de combinaison de pondération est utilisée pour multiplier une séquence de corrélation de chaque antenne par un facteur de poids correspondant de la séquence de corrélation et ensuite réaliser une combinaison pour obtenir une séquence de corrélation combinée pondérée et l'unité de détection est utilisée pour détecter le signal d'accès aléatoire selon la séquence de corrélation combinée pondérée.

7. Dispositif selon la revendication 6 comprenant de plus : une unité d'extension pour étendre le résultat de multiplication, une longueur étendue étant configurée par le système et l'extension de la séquence étant remplie avec "0" et la seconde unité de conversion étant de plus utilisée pour convertir un résultat étendu de l'unité d'extension en un signal de domaine temporel.

8. Dispositif selon la revendication 6 ou 7, l'unité de calcul de facteur de poids étant de plus utilisée pour calculer un facteur de poids de chaque antenne selon $F_i = (max\_f)^p / (facteur_i)^q \times n$, dans laquelle $F_i$ est un facteur de poids de l'antenne i, max_f est le maximum des facteurs de poids indirects de toutes les antennes, $facteur_i$ est un facteur de poids indirect de l'antenne i, p et q sont des nombres réels pas inférieurs à 0 et n est un nombre réel positif.

9. Dispositif selon la revendication 6 ou 7, l'unité de calcul de facteur de poids étant de plus utilisée pour calculer un facteur de poids de chaque antenne selon $F_i = (facteur_i)^p / (min\_f)^q \times n$, dans laquelle $F_i$ est un facteur de poids de l'antenne i, min_f est le minimum des facteurs de poids indirects de toutes les antennes, $facteur_i$ est un facteur de poids indirect de l'antenne i, p et q sont des nombres réels pas inférieurs à 0 et n est un nombre réel positif.

10. Dispositif selon la revendication 6, l'unité d'acquisition de combinaison de pondération étant utilisée pour multiplier une séquence de corrélation de chaque antenne par un facteur de poids correspondant de la séquence de corrélation et ensuite réaliser une combinaison pour obtenir une séquence de corrélation combinée pondérée.

Fig. 1

point-multiplying a received random access signal by a
conjugate of a frequency domain mother code by each
receiving antenna in a base station, and extending the length of
the point multiplication result according to the requirement | 101

performing inverse Fourier transformation on the extended data | 102

evaluating the modulus square of converted data signal having
been subjected to the inverse Fourier transformation, and
obtaining the correlation sequence $Cseq_i$, wherein i represents
the $i^{th}$ antenna | 103

obtaining an indirect weight factor of the correlation sequence
$Cseq_i$, according to the mean value $mean_i$ of the antenna | 104

determining the maximum or the minimum of the indirect
weight factors among the $factor_i$ of all antennae | 105

obtaining a weight factor of each antenna data according to the
maximum or the minimum of the indirect weight factors | 106

adding the obtained weight factor of each antenna to each
antenna data respectively | 107

combining each antenna data, and obtaining a correlation
sequence with MRC | 108

deleting the random access signal according to the correlation
sequence | 109

Fig. 2

```
┌─────────────────────────────────────────────────────────┐
│   ┌─────────────────────────────────────────┐           │
│   │        first converting unit 20         │           │
│   └─────────────────────────────────────────┘           │
│                       │                                  │
│   ┌─────────────────────────────────────────┐           │
│   │      point-multiplication unit 21       │           │
│   └─────────────────────────────────────────┘           │      ┌──────────────┐
│                       │                                  │      │  extending   │
│   ┌─────────────────────────────────────────┐           ├──────│   unit 29    │
│   │       second converting unit 22         │           │      └──────────────┘
│   └─────────────────────────────────────────┘           │
│                       │                                  │
│   ┌─────────────────────────────────────────┐           │
│   │ correlation sequence acquisition unit 23│           │
│   └─────────────────────────────────────────┘           │
│                       │                                  │
│  ┌──────────────────────────────────────────┐           │
│  │  Indirect weight factor acquisition unit 24│         │
│  └──────────────────────────────────────────┘           │
│                       │                                  │
│   ┌─────────────────────────────────────────┐           │
│   │           determining unit 25           │           │
│   └─────────────────────────────────────────┘           │
│                       │                                  │
│   ┌─────────────────────────────────────────┐           │
│   │    weight factor calculating unit 26    │           │
│   └─────────────────────────────────────────┘           │
│                       │                                  │
│   ┌─────────────────────────────────────────┐           │
│   │ weighting combining acquisition unit 27 │           │
│   └─────────────────────────────────────────┘           │
│                       │                                  │
│   ┌─────────────────────────────────────────┐           │
│   │           detection unit 28             │           │
│   └─────────────────────────────────────────┘           │
└─────────────────────────────────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005047530 A1